# EUROPÄISCHE PATENTANMELDUNG

(11) **EP 2 878 354 A1**
(43) Veröffentlichungstag der Anmeldung: **03.06.2015**
(21) Anmeldenummer: 14192610.5
(22) Anmeldetag: 26.02.2009
(51) Int. Cl.: B01D 46/24, B01D 50/00, B01D 46/52, B01D 46/00, F02M 35/024

(54) **Filtereinrichtung, insbesondere Luftfilter für eine Brennkraftmaschine**

(30) Priorität: 26.02.2008 DE 102008011186
(62) Teilanmeldung aus: 09715487.6
(71) Anmelder: MANN+HUMMEL GmbH, 71638 Ludwigsburg (DE)
(72) Erfinder: Becker, Stefan, 68305 Mannheim (DE); Luley, Oliver, 67227 Frankenthal (DE); Münkel, Karlheinz, 75038 Oberderdingen (DE); Wolf, Michael, 66539 Neunkirchen (DE)

(57) **Zusammenfassung**

Eine Filtereinrichtung weist ein Filterelement auf, das aus mindestens zwei radial ineinandergesetzten Filterbälgen gebildet ist, wobei mindestens ein Filterbalg in Radialrichtung zu durchströmen und zwischen den Filterbälgen ein Strömungsraum für das Fluid gebildet ist. Jeder Filterbalg ist als Sternfilter mit sternförmig angeordneten Filterfalten ausgebildet. An mindestens einer Stirnseite des Filterelementes ist ein Dichtring zwischen einem Filterbalg und dem Filtergehäuse angeordnet.

## Beschreibung

### Technisches Gebiet

Die Erfindung bezieht sich auf eine Filtereinrichtung, insbesondere auf einen Luftfilter für eine Brennkraftmaschine.

### Stand der Technik

Aus der EP 1 364 695 A1 ist ein Luftfilter bekannt, der in den Ansaugtrakt einer Brennkraftmaschine integriert wird, um die den Zylindern der Brennkraftmaschine zuzuführende Verbrennungsluft einer Filtration zu unterziehen. Der Luftfilter ist dreiteilig aufgebaut und umfasst in einem Filtergehäuse ein Filterelement, welches als auswechselbare Filterpatrone ausgebildet ist, die axial von der Verbrennungsluft durchströmt wird und radial über einen verschließbaren Deckel in das Filtergehäuse einsetzbar ist. Der Filterpatrone ist ein Zyklonvorabscheider vorgeschaltet, der zur Abscheidung von groben Schmutzpartikeln dient. Stromab der Filterpatrone befindet sich ein Sekundär- bzw. Feinfilterelement, das ebenfalls radial bei geöffnetem Deckel in das Filtergehäuse einsetzbar ist. Zyklonvorabscheider, Filterpatrone und Feinfilterelement liegen axial hintereinander und werden ohne Umlenkung der zu reinigenden Verbrennungsluft in Achsrichtung durchströmt.

Als Hauptfilterelement, welches in der Filterpatrone aufgenommen ist, kommen beispielsweise Wickelfilter in Betracht, die aus einem um einen Kern gewickelten, gewellten Filtermaterial bestehen, wobei auf Grund der Wellenform axiale Strömungskanäle durch das Filterelement gebildet sind, die wechselseitig an der Stirnseite verschlossen sind. Ein derartiges Filterelement wird beispielsweise in der US 7,008,467 B2 beschrieben.

Bekannt sind außerdem Filterelemente, die aus einem sternförmig gefalteten Filterelement in Form eines Filterbalgs bestehen, dessen Filterfalten in Radialrichtung verlaufen, wobei die Stirnkanten der Filterfalten sich in Achsrichtung erstrecken.

Ein Filterelement anderer Bauart, welches sich ebenfalls zur Luftfiltration eignet, wird in der FR 1 288 229 beschrieben. Das Filterelement besteht aus zwei radial ineinandergesetzten Filterbälgen bzw. Sternfiltern mit sternförmig angeordneten Filterfalten, zwischen denen ein Strömungsraum für die axiale Ableitung des gereinigten Fluids angeordnet ist. Die Innenseite des radial innen liegenden Filterbalgs sowie die Außenseite des radial außen liegenden Filterbalgs bilden jeweils die Rohseite, über die das zu reinigende Fluid das Filterelement radial anströmt.

Der zwischenliegende Strömungsraum dient zum axialen Abströmen des gereinigten Fluids.

### Offenbarung der Erfindung

Der Erfindung liegt die Aufgabe zu Grunde, mit einfachen konstruktiven Maßnahmen eine Filtereinrichtung zu schaffen, die sich durch eine hohe Filtrationsleistung auszeichnet, wobei die Filtereinrichtung mit geringem Aufwand gewartet werden können soll.

Diese Aufgabe wird erfindungsgemäß mit den Merkmalen der unabhängigen Ansprüche gelöst. Die abhängigen Ansprüche geben zweckmäßige Weiterbildungen an.

Gemäß einer ersten Lösung der Erfindung weist die Filtereinrichtung in einem Filtergehäuse ein Filterelement auf, das als Mehrfachbalgfilter, insbesondere als Zweifachbalgfilter mit zumindest zwei radial ineinandergesetzten Filterbälgen ausgebildet ist, zwischen denen ein Strömungsraum für das Fluid gebildet ist, wobei der Strömungsraum mit einer Stirnseite des Filterelements kommuniziert. Jeder Filterbalg ist als Sternfilter mit sternförmig angeordneten, sich in Radialrichtung erstreckenden Filterfalten mit axial verlaufenden Stirnkanten ausgebildet. Die radial innen liegenden Stirnkanten der Falten des äußeren Filterbalgs sowie die radial außen liegenden Stirnkanten der Falten des innen liegenden Filterbalgs begrenzen jeweils den Strömungsraum, der zweckmäßigerweise zum Ableiten des gereinigten Fluids dient, ggf. aber auch zum Heranführen des ungereinigten Fluids.

Des Weiteren ist an mindestens einer Stirnseite des Filterelements ein Dichtring angeordnet, welcher sich zwischen einem Filterbalg und dem Filtergehäuse befindet. Der Dichtring dient insbesondere zur strömungsdichten Separierung der Roh- von der Reinseite des Filterelementes und verhindert damit Fehlluftströme, die den Wirkungsgrad der Filtereinrichtung beeinträchtigen würden. Der Dichtring wird zweckmäßigerweise axial zwischen Filterelement und Filtergehäuse, insbesondere der Gehäuseinnenseite, oder einem mit dem Filtergehäuse verbundenen Bauteil eingeklemmt und bevorzugt in Achsrichtung kraftbeaufschlagt. Grundsätzlich kommt aber auch eine radiale Kraftbeaufschlagung bzw. eine Kombination von axialer und radialer Beaufschlagung in Betracht. Außerdem befindet sich der Dichtring vorteilhafterweise an der radialen Außenseite des Filterelementes, insbesondere im Übergang zwischen axialer Stirnseite und radial außen liegender Mantelfläche des Filterelementes. Diese Ausführung ermöglicht es, zumindest einen Teilstrom des zu filtrierenden Fluids über die radial außen liegende Mantelfläche des Filterelementes heranzuführen und zur Filtration radial durch das Filterelement bis zum Erreichen des Strömungsraums zwischen den beiden Filterbälgen hindurchzuführen. In dieser Ausführung begrenzt der Dichtring zugleich den Ringraum zwischen Gehäuseinnenseite und äußerer Mantelfläche des Dichtelementes in Achsrichtung.

In einer Ausführungsform bildet der Strömungsraum den Reinraum und ist axial zur Anströmseite verschlossen.

Die Anströmung des als Mehrfachbalgfilter ausgeführten Filterelementes sowie die Ableitung des gereinigten Fluids kann auf verschiedene Weisen durchgeführt werden. Möglich ist es zum einen, die Wandung jedes Filterbalgs ausschließlich in Radialrichtung zu durchströmen und das gereinigte Fluid ausschließlich axial über den Strömungsraum, der zugleich den Reinraum bildet, abzuleiten. Darüber hinaus sind aber auch Mischformen möglich, beispielsweise dergestalt, dass zumindest ein Balg zusätzlich zur radialen Durchströmung auch axial angeströmt und ebenso die Abströmung zumindest eines Balgs ebenfalls zusätzlich zur Strömungsführung über den Strömungsraum in Achsrichtung über Strömungskanäle innerhalb eines Balgs erfolgt. Voreilhafterweise erfolgt jedoch die axiale Zuströmung über Strömungskanäle des ersten Filterbalgs, beispielsweise des außen liegenden Filterbalgs, und die axiale Abströmung über Strömungskanäle des zweiten Filterbalgs, beispielsweise des radial innen liegenden Filterbalgs. Um die Anströmung und die Abströmung in gewünschter Weise zu erreichen, sind zweckmäßigerweise Abdeckelemente, insbesondere Abdeckscheiben bzw. -ringe an den entsprechenden axialen Stirnseiten der Filterbälge angeordnet. So wird beispielsweise die axiale Stirnseite des radial innen liegenden Filterbalgs an der Anströmseite des Filterelementes von einem Abdeckring überdeckt, so dass an dieser Stelle eine axiale Anströmung ausgeschlossen ist. Die axiale Stirnseite im Anströmbereich des radial außen liegenden Filterbalgs kann dagegen offen sein, um an dieser Stelle zusätzlich zur radialen Anströmung auch eine axiale Anströmung zu erlauben.

Auf der Abströmseite befindet sich vorteilhafterweise am inneren Faltenbalg eine Abdeckscheibe, welche den innen liegenden Anströmraum innerhalb des Faltenbalges axial verschließt, um eine Fehlluftleitung unmittelbar zwischen Roh- und Reinseite zu verhindern. Die axiale Stirnseite des inneren Filterbalges kann dagegen frei von einer Abdeckung sein, so dass hierüber eine axiale Abströmung grundsätzlich möglich ist. Zugleich ist die axiale Stirnseite im Abströmbereich des radial außen liegenden Filterbalgs von einem Abdeckring überdeckt, der an dieser Stelle die axiale Abströmung verhindert.

In einer Ausführungsform kann an zumindest einer Stirnseite zumindest eines Filterbalges ein Abdeckelement angeordnet sein. Das Abdeckelement kann als Abdeckring oder Abdeckscheibe ausgebildet sein. Beispielsweise kann ein erster Filterbalg an einer Stirnseite von einem Abdeckelement abgedeckt sein und der zweite Filterbalg an der gegenüberliegenden Stirnseite von einem Abdeckelement abgedeckt sein.

Des weiteren ist es zweckmäßig, jeweils zwei unmittelbar benachbarte Filterfalten an einer axialen Stirnseite eines Filterbalgs zusammenzuheften, insbesondere miteinander zu verkleben bzw. zu verleimen. Vorteilhafterweise wird dies pro Filterbalg so durchgeführt, dass nur an einer axialen Stirnseite das Zusammenheften der Stirnkanten der Filterfalten durchgeführt wird, wohingegen die Stirnkanten der Filterfalten an der gegenüberliegenden Stirnseite von einem Abdeckelement abgedeckt sind. Es können beispielsweise die Stirnkanten der Filterfalten an der Anströmseite und/oder die Stirnkanten der Filterfalten an der Abströmseite zusammengeheftet sein. Zusammengeheftete Filterfalten können beispielsweise miteinander verklebt sein.

Bezogen auf die beiden Filterbälge wird das Zusammenheften der Stirnkanten der Filterfalten und die Abdeckung wechselseitig durchgeführt, so dass beispielsweise am radial außen liegenden Filterbalg die Stirnkanten verklebt und auf gegenüberliegender axialer Stirnseite von einem Abdeckring abgedeckt sind und am radial innen liegenden Filterbalg die axiale Anströmseite von einer Abdeckscheibe überdeckt ist und die Stirnkanten auf der gegenüberliegenden axialen Abströmseite zusammengeheftet sind. Durch das Zusammenheften der Stirnkanten entstehen in Achsrichtung verlaufende Strömungsräume bzw. -kanäle, wobei im Zusammenspiel mit den Abdeckelementen sichergestellt ist, dass das herangeführte Fluid die Filterwandung radial durchströmen muss.

Die Filterbälge sind vorzugsweise als Sternfilter ausgebildet. Es kann aber auch zweckmäßig sein, keine Sternfaltung vorzusehen, sondern eine Faltung in Achsrichtung mit Faltenkanten, die sich in Umfangsrichtung erstrecken oder zumindest eine Komponente in Umfangsrichtung aufweisen. Derartige Filterbälge mit einer Balgwirkung in Achsrichtung können mit oder ohne sternförmig angeordnete Falten versehen sein. Gegebenenfalls kommt auch eine Faltung mit Sternfaltung und einer Faltung in Achsrichtung in Betracht.

Die Filterbälge sind bevorzugt als Einzelbälge ausgeführt, die bevorzugt radial ineinander gesteckt sind und konzentrisch zueinander angeordnet sind. Gemäß einer alternativen Ausführung ist es aber auch möglich, zwei oder ggf. auch mehr Filterbälge aus einem einzigen, zusammenhängenden Balg zu formen, indem an einer oder an mehreren Stellen des einen Balgs ein Abschnitt umgeknickt wird, wobei die Knickkante eine axiale Stirnkante an der Anström- oder Abströmseite des Filterelementes bildet.

In einer Ausführungsform weist der Strömungsraum zwischen den Filterbälgen einen sich über die axiale Länge des Filterelements ändernden Querschnitt auf.

In einer weiteren Ausführungsform nimmt der Querschnitt des Strömungsraums zur Abströmseite hin zu.

In einer Ausführungsform ändert sich der Querschnitt des Strömungsraums über die axiale Länge konstant.

Des Weiteren ist es möglich, die Filterbälge jeweils gleichartig mit über die axiale Länge gleichem Verlauf oder aber unterschiedlich auszubilden. Möglich ist sowohl eine zylindrische Form als auch eine konische Form eines Filterbalgs bzw. beider Filterbälge. Gemäß einer vorteilhaften Ausführung ist vorgesehen, dass der radial außen liegende Filterbalg Zylinderform aufweist, dessen Außendurchmesser und Innendurchmesser sich über die axiale Länge nicht verändert, und dass der radial innen liegende Filterbalg Konusform aufweist, wobei der Konus sich zweckmäßigerweise von der Anström- zur Abströmseite hin verjüngt. Dadurch erhält man einen Strömungsraum zwischen den Filterbälgen in Form eines Ringkonus, der sich zur Abströmseite hin verbreitert, was unter strömungstechnischen Gesichtspunkten bezüglich der Ableitung des gereinigten Fluids Vorteile bringen kann. Über die axiale Länge besitzt der Strömungsraum somit einen sich ändernden Querschnitt, wobei die Änderungsrate konstant ist. Grundsätzlich ist aber auch eine über die axiale Länge wechselnde Änderungsrate möglich. Außerdem kann der Strömungsraum auch einen gleichbleibenden Querschnitt aufweisen, was dann der Fall ist, wenn die Innenseite des äußeren Filterbalgs und die Außenseite des inneren Filterbalgs konzentrisch zueinander verlaufen.

Des Weiteren kann es vorteilhaft sein, zwischen den Filterbälgen ein Stützgerüst vorzusehen, welches den Strömungsraum zwischen den Filterbälgen einfasst. Insbesondere bei großen, voluminösen Filtereinrichtungen, deren Filterelemente ein entsprechend höheres Gewicht aufweisen, dient das Stützgerüst, welches vorzugsweise aus Kunststoff besteht und zweckmäßigerweise axiale und in Umfangsrichtung verlaufende Streben aufweist, zur Steigerung der Stabilität.

Gemäß eines weiteren Aspektes der Erfindung weist die Filtereinrichtung im Filtergehäuse ein Filterelement auf, das aus einer durchgehenden Filterbahn mit einer Mehrzahl paralleler Filterschichten besteht, die über gekrümmte Verbindungsabschnitte der Filterbahn untereinander verbunden sind, wobei zwischen benachbarten Filterschichten Abstandshalter vorgesehen sind und die Zwischenräume zwischen den benachbarten Filterschichten Strömungsräume für das Fluid bilden. Die Filterschichten sind plan bzw. eben ausgebildet, dementsprechend sind auch die zwischenliegenden Strömungsräume von den parallelen Ebenen begrenzt. Über die gekrümmten Verbindungsabschnitte der Filterbahn, die an gegenüberliegenden Stirnseiten des Filterelementes wechselseitig benachbarte Strömungsräume begrenzen, ist sichergestellt, dass jeder zweite Strömungsraum an der Anströmseite geöffnet bzw. geschossen ist. Das zu filtrierende Fluid wird axial in die offenen Strömungsräume eingeleitet und muss im Strömungsraum radial die begrenzende Filterwandung durchströmen, da die gegenüberliegende axiale Stirnseite dieses Strömungsraumes an der Abströmseite von dem gekrümmten Verbindungsabschnitt verschlossen ist. Mit dem radialen Übertritt in den benachbarten Strömungsraum ist ein axiales Ableiten aus dem Filterelement möglich, nur an der Anströmseite von dem gekrümmten Verbindungsabschnitt verschlossen ist, wohingegen die Abströmseite axial offen ist.

In einer Ausführungsform ist über die Breite des Filterelements - quer zur Durchströmungsrichtung durch die Strömungsräume - eine Mehrzahl von Abstandshaltern zwischen den Filterschichten angeordnet.

Gemäß einer vorteilhaften Weiterbildung ist vorgesehen, dass die Abstandshalter bzw. ein Teil der Abstandshalter als Klebespuren, z. B. Leimraupen oder Klebepunkte, ausgebildet sind, über die benachbarte Filterschichten aneinandergeklebt sind. Die Klebespuren erfüllen demnach einen doppelten Zweck: Zum einen verbinden sie benachbarte, parallel verlaufende Filterschichten miteinander, zum anderen halten sie die Filterschichten auf den gewünschten Abstand zueinander, wodurch ein entsprechender Strömungsraum mit gewünschter Dimension gebildet ist. Gegebenenfalls werden Klebespuren mit sonstigen, nicht klebenden Abstandshaltern kombiniert, die entweder als separate Bauteile ausgeführt sind oder beispielsweise durch Verprägen der Filterbahn quer zur Achsrichtung erzeugt werden. Die Abstandshalter können auch als Ausprägungen in der Filterschicht ausgebildet sein.

Das gesamte Filterelement besteht vorzugsweise aus genau einer durchgehenden und zu den Filterschichten zusammengelegten Filterbahn, was insbesondere unter fertigungstechnischer Hinsicht Vorteile bringt. So ist es beispielhaft möglich, auf eine flexible Filterbahn zumindest zwei parallel verlaufende Klebespuren aufzubringen und anschließend die Filterbahn zu einer Mehrzahl parallel liegender Filterschichten zu falten, so dass die Klebespuren zwischen jeweils zwei benachbarten Filterschichten angeordnet sind und diese miteinander verkleben.

In einer Ausführungsform bilden die gekrümmten Verbindungsabschnitte der Filterbahn auf axial sich gegenüberliegenden Seiten die Anström- bzw. Abströmseite des Filterelements.

In den Außendimensionen weist das Filterelement Quaderform auf, wobei gegenüberliegende Stirnseiten des Quaders die Anström- bzw. Abströmseite bilden.

Gemäß eines weiteren Aspektes der Erfindung ist das Filterelement zylindrisch aufgebaut und weist eine Mehrzahl konzentrisch angeordneter Filterzylinder auf oder ist spiralförmig gewickelt, die jeweils aus Filtermaterial bestehen, wobei zwischen benachbarten Filterzylindern Abstandshalter vorgesehen sind und die Zwischenräume zwischen benachbarten Filterzylindern Strömungsräume für das Fluid bilden. Um zu verhindern, dass das axial an einer Seite herangeführte Rohfluid ohne Filtration auf der gegenüberliegenden Stirnseite abgeleitet wird, sind die Strömungsräume zwischen den Filterzylindern zweckmäßigerweise wechselseitig an einer axialen Stirnseite offen und an der gegenüberliegenden Stirnseite verschlossen. Dies erfolgt beispielsweise derart, dass jeweils unmittelbar benachbarte Strömungsräume, die konzentrisch zueinander liegen, an der axialen Anströmseite offen bzw. geschossen sind und entsprechend an der gegenüberliegenden Abströmseite geschlossen bzw. geöffnet sind. Auf diese Weise ist sichergestellt, dass in das Filterelement hineinströmendes Fluid innerhalb der Strömungsräume radial die Wandung der benachbarten Filterzylinder durchströmen muss, um in den benachbarten Strömungsraum zu gelangen, aus dem eine axiale Abströmung möglich ist.

Gemäß zweckmäßiger Weiterbildung sind zwischen den konzentrischen Filterzylindern Abstandshalter vorgesehen, die als Klebestreifen ausgebildet sind. Grundsätzlich ist es möglich, entweder ausschließlich Klebestreifen als Abstandshalter vorzusehen oder eine Kombination von klebenden und nicht klebenden Abstandshaltern vorzusehen.

Bei allen vorgenannten Filtereinrichtungen sind vorteilhafterweise Dichtringe zwischen Filterelement und Innenseite des aufnehmenden Filtergehäuses vorgesehen, die die Rohseite von der Reinseite des betreffenden Filterelementes separieren. In einer Ausführungsform ist daher an mindestens einer Stirnseite ein Dichtring zwischen Filterelement und Filtergehäuse angeordnet. Der Dichtring befindet sich vorzugsweise benachbart zur Abströmseite und insbesondere im Übergang zwischen der außen liegenden Mantelfläche des Filterelementes und der axialen Stirnseite im Abströmbereich. Diese Konfiguration erlaubt es, auch die außen liegende Mantelfläche als Strömungsseite zu nutzen, insbesondere zur Anströmung mit dem unfiltrierten Fluid. Die Kraftbeaufschlagung des Dichtringes erfolgt vorzugsweise in Achsrichtung, es kann ggf. aber auch eine ausschließliche oder zusätzliche radiale Beaufschlagung des Dichtringes zweckmäßig sein.

Der Dichtring erstreckt sich in Radialrichtung vorteilhafterweise bis zur äußeren Mantelfläche des Filterelementes, er weist somit keinen radialen Überstand auf. Gemäß einer weiteren Ausführung kann es aber vorteilhaft sein, das zumindest ein Abschnitt des Dichtringes die äußere Mantelfläche des Filterelementes radial überragt.

In einer Ausführungsform ist das Filterelement quer zur Durchströmungsrichtung in das Filtergehäuse einsetzbar bzw. aus dem Filtergehäuse zu entnehmen.

Das Filterelement ist vorteilhafterweise unabhängig von seiner konstruktiven Ausführung radial über eine von einem Deckel zu verschließende Gehäuseöffnung in das Filtergehäuse einzusetzen und axial von dem zu filtrierenden Fluid zu durchströmen.

In einer weiteren Ausführungsform ist mindestens eine weitere Filtereinheit im Filtergehäuse vorgesehen, wobei das Filterelement und die weitere Filtereinheit hintereinander liegend angeordnet sind und eine gemeinsame Durchströmungsrichtung für das zu reinigende Fluid besitzen.

Des Weiteren kann es zweckmäßig sein, dem Filterelement einen Vorfilter oder Vorabscheider vorzuschalten, der insbesondere als Zyklonvorabscheider ausgeführt ist und zweckmäßigerweise ebenfalls in Achsrichtung durchströmt wird. Außerdem kann gemäß einer weiteren vorteilhaften Ausführung dem Filterelement ein Sekundär- bzw. Feinfilterelement nachgeschaltet werden, das vorteilhafterweise ebenfalls in Achsrichtung durchströmt wird. In Kombination mit dem Vorfilter erhält man damit insgesamt eine axiale Durchströmung von drei Filtereinheiten. Das nachgeschaltete Feinfilterelement wird vorzugsweise ebenso wie das Hauptfilterelement radial und/oder quer zur Durchströmungsrichtung über die verschließbare Gehäuseöffnung in das Filtergehäuse eingesetzt. Als Feinfilterelement kommen beispielsweise Blockelemente in Betracht.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine perspektivische Darstellung einer Filtereinrichtung, die insbesondere als Luftfilter für Brennkraftmaschinen eingesetzt wird und axial hintereinander einen Zyklonvorabscheider, ein Hauptfilterelement und ein nachgeschaltetes Feinfilterelement aufweist, wobei das Hauptfilterelement als Doppelbalgfilter mit zwei radial ineinandergesetzten Filterbälgen ausgebildet ist,
Fig. 2 die Filtereinrichtung nach Fig. 1 aus einer anderen Perspektive,
Fig. 3 das Hauptfilterelement der Filtereinrichtung aus Fig. 1 bzw. 2 im Schnitt,
Fig. 4 eine perspektivische Ansicht auf die sternförmigen Filterfalten eines Hauptfilterelementes,
Fig. 5 und 6 eine Filtereinrichtung analog zu Fig. 1 bzw. 2, jedoch mit einer alternativen Ausführung des Hauptfilterelementes, das aus zwei radial ineinandergesetzten Filterbälgen besteht, die im Bereich der axialen Anströmseite zusammenhängen,
Fig. 7 das Hauptfilterelement aus Fig. 5 bzw. 6 im Schnitt,
Fig. 8 und 9 eine weitere Ausführung einer Filtereinrichtung mit Zyklonvorabscheider, Hauptfilterelement und nachgeschaltetem Feinfilterelement, wobei das Hauptfilterelement als quaderförmiges Element ausgeführt ist und aus einer durchgehenden Filterbahn mit einer Mehrzahl paralleler Filterschichten besteht, die über gekrümmte Verbindungsabschnitte untereinander verbunden sind,
Fig. 10 das Hauptfilterelement aus Fig. 8 und 9 in einer perspektivischen Einzeldarstellung,
Fig. 11 eine vergrößerte Darstellung des Ausschnittes XI aus Fig. 10,
Fig. 12 eine vergrößerte Darstellung des Ausschnittes XII aus Fig. 10,
Fig. 13 und 14 noch eine weitere Ausführung einer Filtereinrichtung mit Zyklonvorabscheider, Hauptfilterelement und nachgeschaltetem Feinfilterelement, wobei das Hauptfilterelement eine Mehrzahl konzentrisch angeordneter Filterzylinder aus Filtermaterial aufweist, zwischen denen Abstandhalter vorgesehen sind, wobei die Zwischenräume zwischen den Filterzylindern Strömungsräume für das Fluid bilden,
Fig. 15 das Hauptfilterelement aus Fig. 13 bzw. 14 in einer perspektivischen Schnittdarstellung,
Fig. 16 eine Ausschnittsvergrößerung des Details XVI aus Fig. 15,
Fig. 17 eine Ausschnittsvergrößerung des Details XVII aus Fig. 15.

In den Figuren sind gleiche Bauteile mit gleichen Bezugszeichen versehen.

### Ausführungsformen der Erfindung

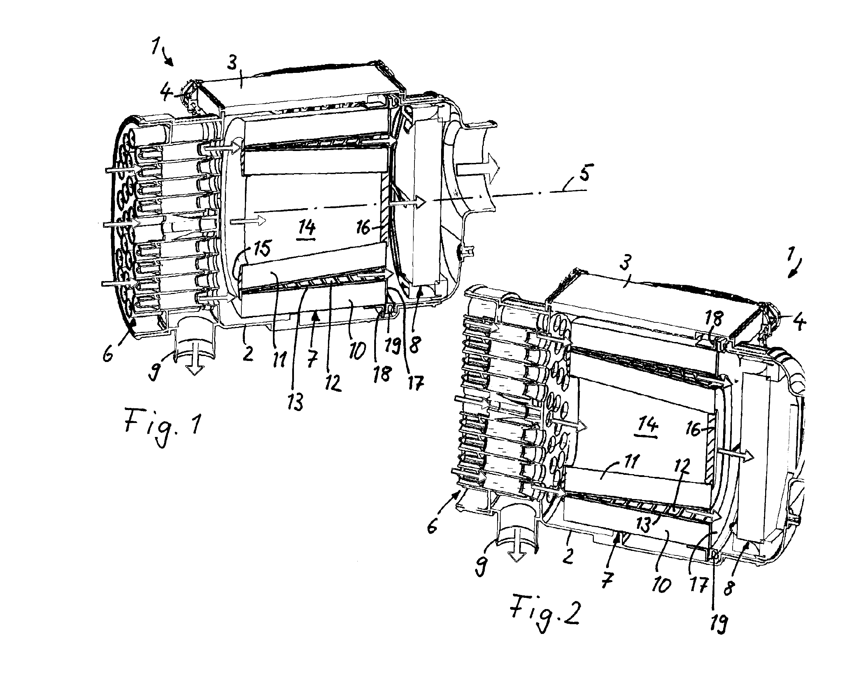

Bei der in den Figuren 1 und 2 dargestellten Filtereinrichtung 1 handelt es sich um einen Luftfilter für eine Brennkraftmaschine, bestehend aus einem Filtergehäuse 2, in welchem ein Hauptfilterelement 7 aufgenommen ist, einem als Vorfilter ausgebildeten Zyklonvorabscheider 6 sowie einem nachgeschalteten Feinfilterelement 8. Das Filtergehäuse 2 weist an seiner Umfangsseite eine Öffnung auf, die von einem über Verschlusselemente 4 lösbar angeordneten und verschließbaren Deckel 3 abgedeckt ist. Über diese Öffnung in der Mantelfläche des Filtergehäuses kann das Hauptfilterelement 7 und zweckmäßigerweise auch das Feinfilterelement 8 radial bzw. quer zur Achsrichtung in den Aufnahmeraum innerhalb des Filtergehäuses 2 eingesetzt bzw. aus diesem entnommen werden. Das Hauptfilterelement 7 befindet sich unmittelbar unterhalb des Deckels 3, das nachgeschaltete Feinfilterelement 8 liegt dagegen axial verschoben in einem Vorsprung im Filtergehäuse, so dass zum Einsetzen des Feinfilterelementes 8 dieses zunächst radial bei geöffnetem Deckel in das Filtergehäuse 2 eingesetzt und anschließend axial in den Vorsprung verschoben wird.

Auch der Zyklonvorabscheider 6 befindet sich in einem Vorsprung, welcher einteilig mit dem Filtergehäuse 2 ausgebildet ist. Im Zyklonvorabscheider werden die Schmutzpartikel aus der axial herangeführten Luft durch die Fliehkraft in einem rotierenden Luftstrom nach außen getragen und abgeschieden. Über eine Austragöffnung 9 im Filtergehäuse, die nach unten gerichtet sein kann, können die Schmutzpartikel, welche im Zyklonvorabscheider abgeschieden wurden, aus dem Filtergehäuse entfernt werden. Gegebenenfalls ist der Vorsprung, in dem der Zyklonvorabscheider aufgenommen ist, als separates Bauteil ausgeführt, das mit dem Filtergehäuse verbunden ist.

Vorfilter 6, Hauptfilterelement 7 und Feinfilterelement 8 sind axial hintereinander liegend angeordnet und weisen die gleich Längsachse 5 auf, welche zugleich die Längsachse der gesamten Filtereinrichtung 1 bildet. Die Durchströmung mit dem zu reinigenden Fluid erfolgt in Achsrichtung gemäß den eingetragenen Pfeilen.

Das Hauptfilterelement 7 besteht aus zwei einzelnen, radial ineinandergesetzten Filterbälgen 10 und 11, wobei der äußere Filterbalg 10 zylindrisch und der innere Filterbalg 11 konisch ausgebildet ist und sich in Strömungsrichtung verjüngt, jedoch eine gleichbleibende Faltenbreite aufweist. Zwischen der Innenseite des äußeren Filterbalgs 10 und der Außenseite des inneren Filterbalgs 11 ist ein Strömungsraum 12 gebildet, der auf Grund der abweichenden Form der beiden Filterbälge 10 und 11 in Achsrichtung gesehen einen veränderlichen Querschnitt aufweist. Da sich der innere Filterbalg 11 in Strömungsrichtung verjüngt, besitzt dementsprechend der Strömungsraum 12 einen sich in Strömungsrichtung vergrößernden Querschnitt.

Eingefasst ist der Strömungsraum 12 von einem Stützgerüst 13, das die beiden Filterbälge 10 und 11 gegeneinander abstützt und dem gesamten Filterelement 7 zusätzliche Stabilität verleiht. Der Strömungsraum 12 ist an der axialen Anströmseite verschlossen, was dadurch erzielt wird, dass an dieser Seite ein Abdeckring 15 angeordnet ist, welcher die axiale Stirnseite des radial innen liegenden Filterbalgs 11 überdeckt und zusätzlich auch den schmalen Spalt des Strömungsraumes 12 an dieser Seite. Es kann aber auch zweckmäßig sein, die beiden Filterbälge 10 und 11 an der Anströmseite des Hauptfilterelementes so weit zusammenzuführen, dass kein Strömungsspalt zur Anströmseite hin gegeben ist; in diesem Fall genügt es, den Abdeckring 15 lediglich an der axialen Stirnseite des inneren Filterbalgs 11 anzuordnen.

Das im Zyklonvorabscheider 6 vorgefilterte Fluid wird axial der stirnseitigen Anströmseite des Hauptfilterelements 7 zugeführt. Ein Teil des Fluids strömt unmittelbar axial in den Innenraum 14 des inneren Filterbalgs 11, der zur Abströmseite hin von einer Abdeckscheibe 16 verschlossen ist. Die Abdeckscheibe 16 erstreckt sich radial nur über die Öffnung des Innenraums 14, so dass das Fluid im Innenraum 14 axial von der Abdeckscheibe 16 an der Abströmung gehindert ist und stattdessen radial die Wandung des inneren Filterbalgs 11 durchströmen muss und weiter in den Strömungsraum 12 zwischen den Filterbälgen 10 und 11 gelangt, der einen Reinraum für das im Hauptfilterelement 7 gereinigte Fluid darstellt.

Ein zweiter Teilstrom des zum Hauptfilterelement 7 herangeführten Fluids tritt unmittelbar über die axiale Stirn- bzw. Anströmseite in den radial außen liegenden Filterbalg 11 ein, der an der gegenüberliegenden, axialen Abströmseite verschlossen ist, so dass das eintretende Fluid radial nach innen in den Strömungsraum 12 einströmt, der zur Reinseite des Hauptfilterelementes 7 hin geöffnet ist, so dass das gereinigte Fluid axial aus dem Strömungsraum 12 abströmen kann. Ein weiterer Teilstrom gelangt an die radial außen liegende Mantelfläche des außen liegenden Hauptfilterelementes 10 und durchströmt dieses radial von außen nach innen bis zum Strömungsraum 12.

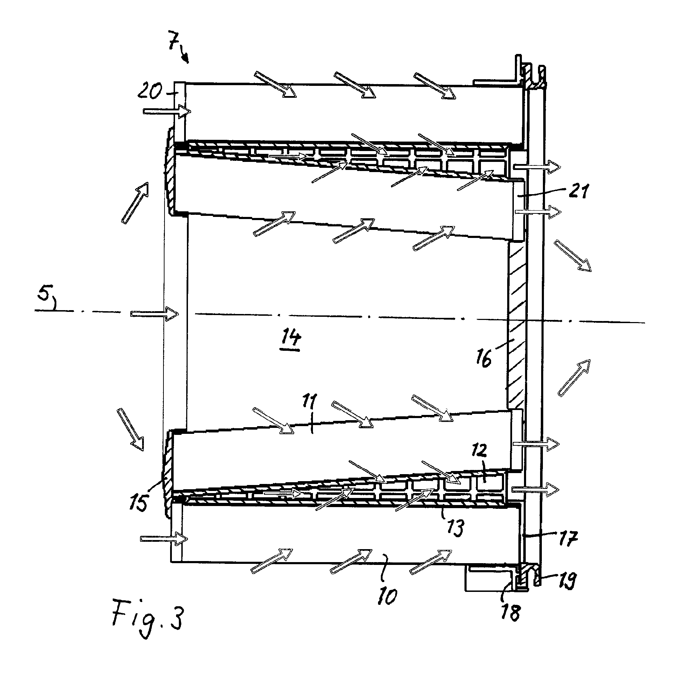

Wie den Figuren 1 und 2 und insbesondere der vergrößerten Darstellung des Filterelementes 7 nach Fig. 3 weiters zu entnehmen, ist die axiale Stirnseite des radial außen liegenden ersten Filterbalgs 10 im Bereich der Reinseite bzw. Abströmseite von einem Abdeckring 17 abgedeckt, der eine axiale Abströmung des Fluids verhindert, so dass das Fluid im äußeren Balg 10 gezwungen ist, radial von außen nach innen in den Strömungsraum 12 zu strömen.

Einteilig mit dem Abdeckring 17 ist ein Anschlagsflansch 18 ausgebildet, der sich auf der radialen Außenseite des radial äußeren Filterbalgs 10 im Bereich der Abströmseite befindet und einen Dichtring 19 begrenzt und abstützt, der an der Abströmseite axial zwischen dem Anschlagflansch 18 und einem Gehäusebauteil des Filtergehäuses eingeklemmt ist. Dieser Dichtring 19 trennt die Rohseite von der Reinseite des Filterelements 7. Der Dichtring 19 weist ein U-förmiges Profil auf, wobei die offene U-Seite radial nach außen weist. Der Dichtring 19 befindet sich unmittelbar an der Abströmseite bzw. der Stirnseite des Filterelementes 7 und erstreckt sich in Radialrichtung im Wesentlichen beginnend von der radial außen liegenden Mantelfläche des äußeren Filterbalgs 10 nach außen. Es kann zweckmäßig sein, dass der Dichtring 19 sich zumindest teilweise auch entlang der axialen Stirnseite an der Abströmseite erstreckt und insoweit an seiner Innenseite einen kleineren Durchmesser aufweist als der Durchmesser des Filterbalgs 10 an der radial außen liegenden Mantelfläche.

In Einbaulage wird der Dichtring 19 axial beaufschlagt. Es kann aber zweckmäßig sein, den Dichtring 19 zusätzlich radial zu beaufschlagen.

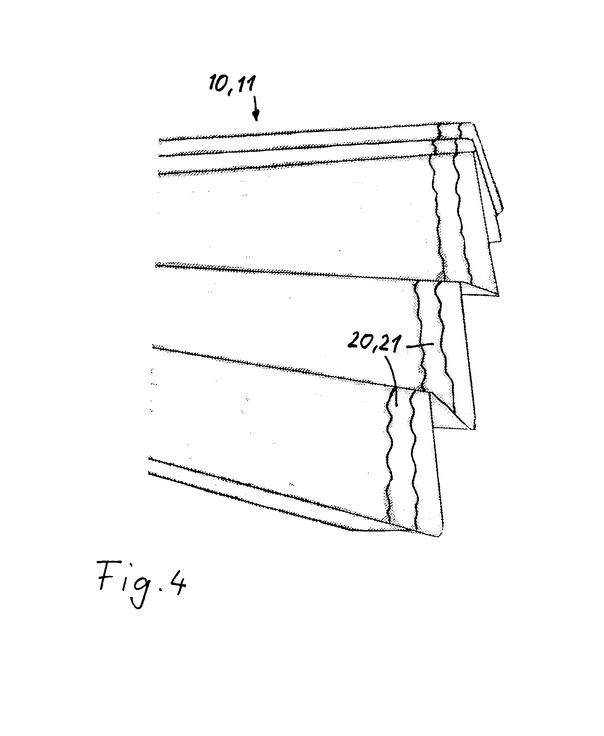

Wie Fig. 4 zu entnehmen, sind die beiden Filterbälge 10 und 11 jeweils als sternförmig gefaltete Faltenfilter ausgebildet, deren Falten jeweils im Bereich einer Stirnseite verklebt sind. Hierzu sind Klebeschichten 20 und 21 im Bereich der Stirnseiten auf die einzelnen Falten jedes Filterbalgs aufgebracht, um zwei unmittelbar aneinanderliegende Falten miteinander zu verkleben. Der radial außen liegende Filterbalg 10 weist eine derartige Klebeschicht 20 an der Anströmseite auf, der radial innen liegende Filterbalg 11 eine entsprechende Klebeschicht 21 im Bereich der Abströmseite. Die Verklebung hat zur Folge, dass jeweils zwei unmittelbar benachbarte Falten zusammengeklebt sind und zwischen zwei Paaren zusammengeklebter Falten ein in Achsrichtung der Längsachse 5 erlaufender Strömungskanal gebildet ist, der sich über die axiale Länge jedes Filterbalgs erstreckt. Dies bewirkt, dass, wie in Fig. 3 dargestellt, herangeführtes Fluid axial über die verklebten Stirnkanten des radial außen liegenden Filterbalgs 10 entlang der axialen Strömungskanäle einströmen kann, wohingegen im radial innen liegenden Filterbalg 11 eine axiale Abströmung über die mit der Klebeschicht 21 versehene Stirnkante im Abströmbereich möglich ist.

In Fig. 4 ist ein Filterbalg 10 bzw. 11 in Form eines Sternfilters während des Herstellungsprozesses dargestellt. Auf lediglich eine Seite der Falten ist eine Kleberaupe 20 bzw. 21 aufgebracht, so dass bei einem Zusammenkleben unmittelbar benachbarter Falten jeweils zwei Schichten aufeinander liegen und über die Kleberaupen zusammengeleimt sind. Auf der den Kleberaupen 20, 21 gegenüberliegenden Seite der Falten wird auf eine entsprechende Klebeschicht verzichtet, so dass an dieser Seite axiale Strömungskanäle gebildet sind.

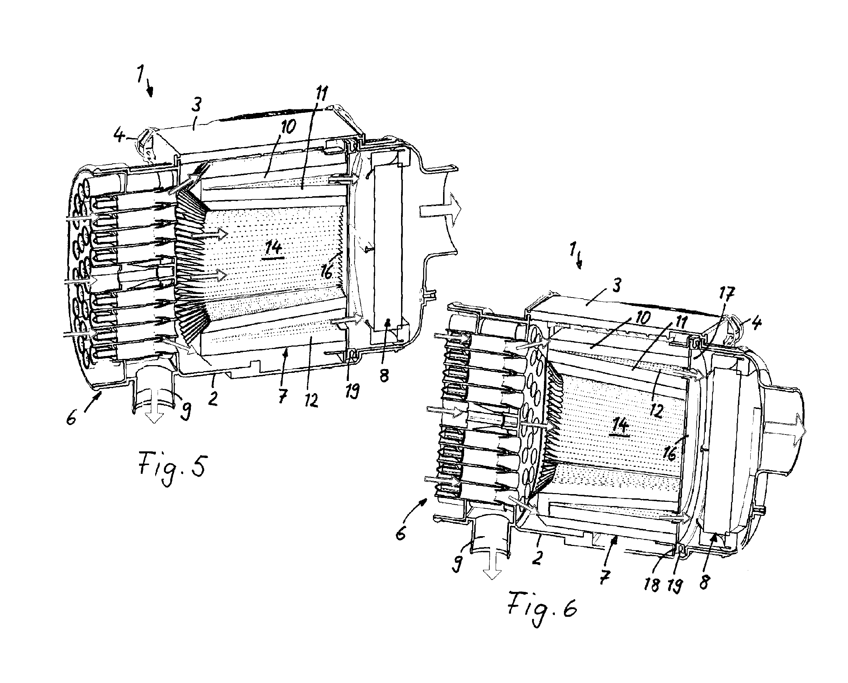

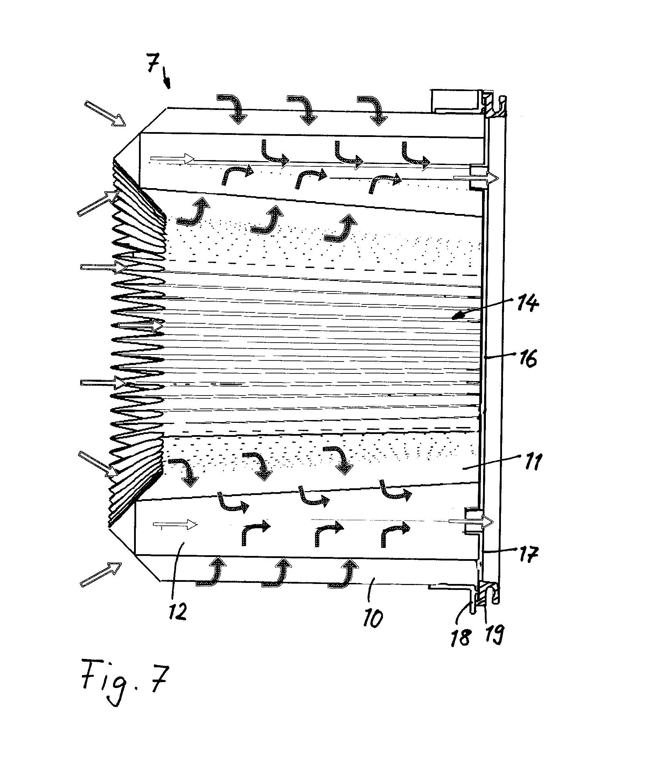

Das Ausführungsbeispiel gemäß den Figuren 5 bis 7 entspricht weitgehend dem ersten, in den Figuren 1 bis 4 dargestellten Ausführungsbeispiel, so dass bezüglich übereinstimmender Merkmale auf die dortige Beschreibung verwiesen wird. Auch das Hauptfilterelement 7 umfasst zwei Filterbälge mit einem radial außen liegenden Filterbalg 10 und einem radial innen liegenden Filterbalg 11, die jedoch im Unterschied zum ersten Ausführungsbeispiel nicht als zwei separate Bauteile, sondern als ein gemeinsames, über die Stirnseite zusammenhängendes Bauteil ausgeführt sind. Der äußere Filterbalg 10 weist eine zylindrische Grundform auf, der innere Filterbalg 11 eine Konusform, so dass der zwischenliegende Strömungsraum 12 sich in Achsrichtung zur Abströmseite hin im Querschnitt erweitert. An der Abströmseite ist der innere Filterbalg 11 von der Abdeckscheibe 16 strömungsdicht abgeschlossen. Der äußere Filterbalg 10 ist ebenfalls an der Abströmseite strömungsdicht von dem Abdeckring 17 überdeckt. Zwischen der Abdeckscheibe 16 und dem radial umgreifenden Abdeckring 17 klafft eine ringförmige Lücke, über die der Strömungsraum 12 mit der Abströmseite bzw. Reinseite kommuniziert.

An der Anströmseite weisen äußerer Filterbalg 10 und innerer Filterbalg 11 eine gemeinsame Stirnkante auf, an der die einzelnen Falten jedes Filterbalgs an dieser Stirnkante zusammenhängen. Fertigungstechnisch kann dies beispielsweise dadurch erreicht werden, dass in ein zylindrisch gefaltetes Filterpapier sternförmige Falten mit Stirnkanten in Achsrichtung eingeprägt werden und anschließend ein Teil des Filterzylinders umgestülpt wird, so dass zwei radial ineinandergesetzte Filterbälge gebildet sind.

Die Anströmung erfolgt über die gesamte axiale Stirnseite, die sich zusammensetzt aus beiden Filterbälgen 10 und 11. Die Abströmung erfolgt lediglich über die ringförmige Strömungsöffnung zwischen der Abdeckscheibe 16 und dem Abdeckring 17.

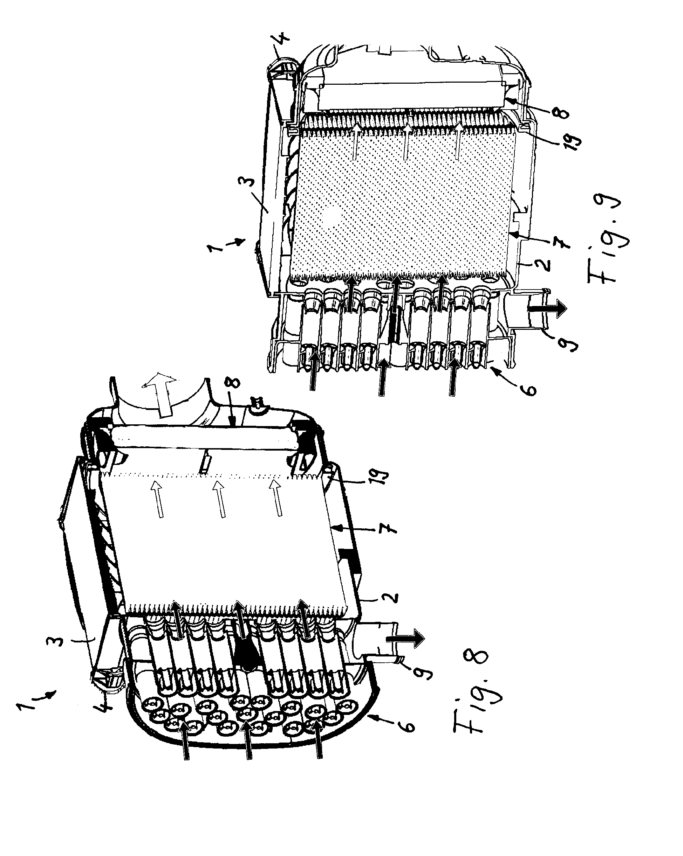

In den Figuren 8 bis 12 ist ein weiteres Ausführungsbeispiel für eine Filtereinrichtung zur Filtration gasförmige Fluide, insbesondere Verbrennungsluft für Brennkraftmaschinen dargestellt. Wie bei den vorangegangenen Ausführungsbeispielen besteht die Filtereinrichtung 1 gemäß den Figuren 8 und 9 aus einem Filtergehäuse 2 mit einem darin seitlich einzuführenden Hauptfilterelement 7, dem in axialer Durchströmungsrichtung ein Vorfilter 6 vorgeschaltet ist, der als Zyklonvorabscheider ausgebildet ist, und dem ein Feinfilterelement 8 axial nachgeschaltet ist. Die Durchströmungsrichtung aller Filtereinheiten erfolgt axial ohne Umkehrung oder Umlenkung der Strömungsrichtung.

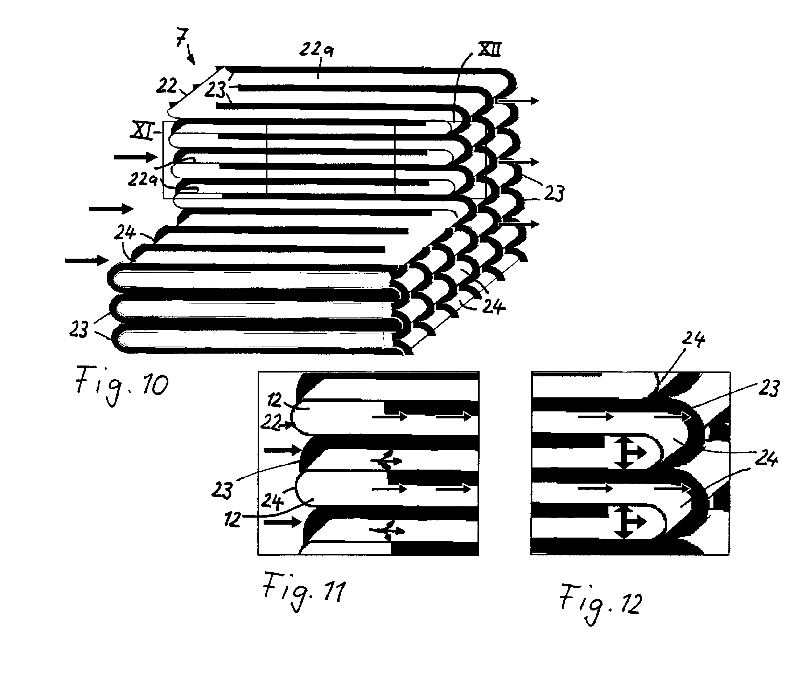

In den Figuren 10 bis 12 ist das Hauptfilterelement 7 im Detail dargestellt. Das Filterelement 7 besteht aus einer durchgehenden Filterbahn 22, die zu einer Mehrzahl parallel zueinander verlaufender Filterschichten 22a zusammengelegt bzw. -gefaltet ist, die zueinander auf Abstand liegen. Insgesamt weist das Filterelement 7 Quaderform auf. Zwischen jeweils zwei benachbarten Filterschichten 22a befinden sich Strömungsräume bzw. -kanäle, in denen das Fluid axial strömen kann. Auf Grund der einteiligen Ausführung mit zweckmäßigerweise nur einer einzigen Filterbahn 22 sind die einzelnen Filterschichten 22a über gekrümmte Verbindungsabschnitte 24 untereinander verbunden, welche ebenfalls einteiliger Bestandteil der Filterbahn 22 sind. Hieraus ergeben sich an der Anströmseite des Filterelementes 7 Einströmöffnungen zu Strömungskanälen zwischen parallelen Filterschichten 22a, die jedoch an der Abströmseite von einem Verbindungsabschnitt 24a der Filterbahn verschlossen sind, so dass das eingeströmte Rohfluid nicht axial entweichen kann, sondern radial durch benachbarte Filterschichten hindurch strömen muss. Daraufhin gelangt das Fluid in benachbarte Strömungsräume 12, die Reinräume darstellen und im Bereich der axialen Anströmseite von einem gekrümmten Verbindungsabschnitt 24 verschlossen sind, jedoch an der axialen Abströmseite offen ausgebildet sind, so dass das gereinigte Fluid an dieser Seite axial aus dem Filterelement 7 abströmen kann.

Die Filterschichten 22a werden mithilfe von Klebestreifen 23 auf Abstand zueinander gehalten, die die Funktion von Abstandshaltern haben und außerdem benachbarte Filterschichten aneinanderkleben. Vorteilhafterweise ist über die Breite des Filterelementes eine Mehrzahl parallel verlaufender Klebestreifen 23 zwischen jeweils zwei benachbarten Filterschichten 22a angeordnet. Zwischen jeweils zwei parallelen Klebestreifen 23 verläuft ein kanalförmiger Strömungsraum; über die gesamte Breite des Filterelementes entstehen dadurch mehrere parallel verlaufende Strömungskanäle bzw. -räume zwischen zwei Filterschichten 22a.

Zur Herstellung des Filterelementes 7 werden auf eine flexible, durchgehende Filterbahn mindestens zwei parallel verlaufende Klebestreifen bzw. -raupen aufgebracht, und zwar zvveckmäßigerweise auf beiden Seiten der Filterbahn. Anschließend wird die Filterbahn zu mehreren Filterschichten gefaltet, wobei die Klebesteifen die parallel zueinander liegenden Filterschichten zusammenhalten und zugleich abstützen.

Es kann zweckmäßig sein, zusätzliche Abstandshalter vorzusehen, die ggf. nicht klebend ausgebildet sind.

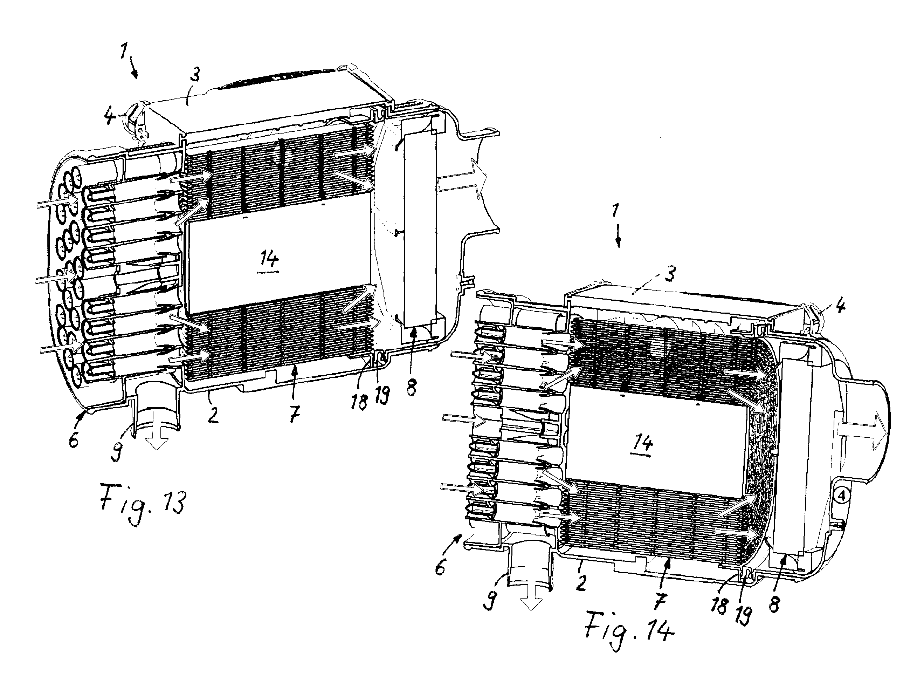

Ein weiteres Ausführungsbeispiel für einen Filtereinrichtung 1 zur Filtration gasförmiger Fluide ist in den Figuren 13 bis 17 dargestellt. Auch in diesem Ausführungsbeispiel ist die Filtereinrichtung 1 dreiteilig aufgebaut und umfasst einen Vorfilter 6, ein Hauptfilterelement 7 und ein Feinfilterelement 8, wobei alle Filtereinheiten axial in gleicher Richtung zu durchströmen sind und Hauptfilterelement 7 sowie Feinfilterelement 8 radial bei geöffnetem Gehäusedeckel 3 in das Filtergehäuse 2 einzusetzen sind.

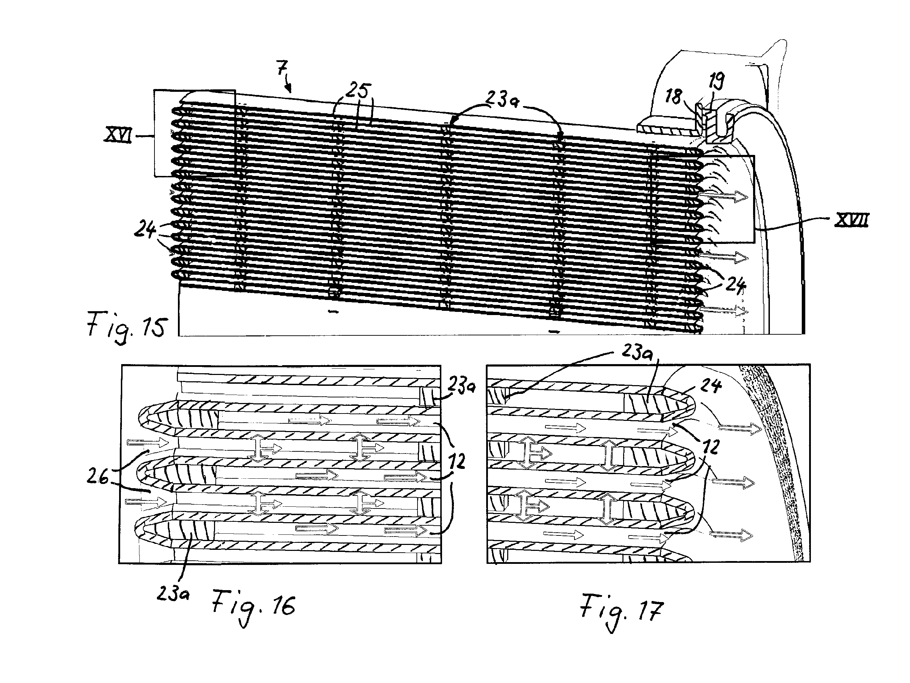

Wie der Einzeldarstellung des Filterelements 7 gemäß den Figuren 15 bis 17 zu entnehmen, ist das Filterelement zylindrisch aufgebaut und umfasst eine Mehrzahl konzentrisch zueinander angeordneter, einzelner Filterzylinder 25, wobei jeweils zwei unmittelbar benachbarte Filterzylinder 25 auf Abstand zueinander liegen, so dass zwischen den Filterzylindern 25 jeweils ein Strömungsraum gegeben ist. Wie der vergrößerten Darstellung gemäß Fig. 16 und 17 zu entnehmen, sind diese Strömungsräume, die sich in Achsrichtung erstrecken, jeweils an einer axialen Stirnseite des Filterelementes verschlossen und an der gegenüberliegenden Stirnseite des Filterelementes geöffnet. Jeweils zwei in Radialrichtung unmittelbar benachbarte Strömungsräume sind an unterschiedlichen axialen Stirnseiten verschlossen bzw. geöffnet. Dadurch sind zum einen Strömungsräume bzw. -kanäle gebildet, die an der Anströmseite geschlossen und an der Abströmseite geöffnet sind und über die das gereinigte Fluid abströmen kann. Zum andern sind Einströmkanäle 26 gebildet, die an der Anströmseite geöffnet und an der Abströmseite geschlossen sind. An dieser Seite eintretendes Rohfluid kann nicht axial über die Einströmkanäle 26 abströmen, vielmehr muss das Rohfluid radial durch die Wandungen des Filtermaterials benachbarter Filterzylinder hindurch treten und strömt anschließend axial über die die Reinräume darstellenden Strömungsräume 12 ab.

Jeweils zwei unmittelbar benachbarte Filterzylinder 25 sind stirnseitig über Verbindungsabschnitte 24 miteinander verbunden, die aber zweckmäßigerweise als von den Filterzylindern 25 separates Bauteil ausgeführt sind und mit den Stirnseiten von zwei radial benachbarten Filterzylindern verbunden werden. Die Verbindungsabschnitte 24 besitzen daher Ringform. Die Verbindungsabschnitte 24 verbinden beispielsweise an der Anströmseite jeweils zwei radial unmittelbar benachbarte Filterzylinder 25 miteinander, wobei sich hieran radial nach innen und radial nach außen jeweils eine Lücke anschließt, um einen Einströmkanal für das Rohfluid zu bilden. An der Abströmseite sind die Verbindungsabschnitte 24 gegenüber den Verbindungsabschnitten an der Anströmseite radial um jeweils einen Filterzylinder versetzt, so dass die Einströmkanäle an der Abströmseite geschlossen sind und zugleich die Strömungsräume zur Ableitung des gereinigten Fluids anströmseitig geschlossen und abströmseitig geöffnet sind.

Zusätzlich sind Abstandshalter 23a vorgesehen, über die die einzelnen Filterzylinder 25 auf Abstand zueinander gehalten und fixiert werden. Wie Fig. 15 zu entnehmen, kann über die axiale Länge des Filterelementes 7 eine Mehrzahl einzelner, vorzugsweise ringförmig ausgebildeter Abstandshalter 23a angeordnet sein, wobei zweckmäßigerweise an einer axialen Position mehrere Abstandshalter 23a zwischen jeweils zwei Filterzylindern 25 positioniert sind. An unterschiedlichen axialen Stellen können die Abstandshalter 23a entsprechend den Verbindungsabschnitten 24 an den Stirnseiten jeweils zwischen zwei Filterzylindern angeordnet sein, wobei zweckmäßigerweise nur in jeden zweiten Zwischenraum - in Radialrichtung gesehen - zwischen benachbarten Filterzylindern jeweils ein Abstandshalter 23a eingesetzt ist. An axial unterschiedlichen Stellen sind die Abstandshalter 23a in der Weise in jede zweite Lücke zwischen den Filterzylindern eingesetzt, dass insgesamt, also über die gesamte axiale Länge des Filterelementes gesehen, jeder Zwischenraum zwischen benachbarten Filterzylindern mit Abstandshaltern an zumindest einer axialen Position ausgefüllt ist.

Die Abstandshalter 23a können jeweils als Klebestreifenabschnitt ausgeführt sein und zusätzlich zu ihrer stützenden Funktion auch eine klebende Funktion übernehmen. Gleichwohl kann es auch möglich sein, nicht klebende Abstandshalter zu verwenden.

Gemäß einer modifizierten Ausführung besteht das in den Fig. 13 bis 17 dargestellte Filterelement 7 aus einer spulenförmig gewickelten Filterbahn, die entweder glattwandig ausgebildet ist oder Falten aufweisen kann. Über Abstands- und/oder Verschluss- bzw. Abdeckelemente werden die axiale Strömungskanäle im Filterelement zum Teil an der Abströmseite und zum Teil an der Anströmseite verschlossen, wobei die jeweils gegenüberliegende Stirnseite eines Strömungskanals offen bleibt, so dass das Filtermaterial des Filterelements von dem eingeleiteten Fluid radial durchströmt werden muss.

## Patentansprüche

1. Filtereinrichtung, insbesondere Luftfilter für eine Brennkraftmaschine, mit einem in einem Filtergehäuse (2) angeordneten Filterelement (7), das von einem zu filtrierenden Fluid zu durchströmen ist, wobei das Filterelement (7) als Mehrfachbalgfilter mit mindestens zwei radial ineinandergesetzten Filterbälgen (10, 11) ausgebildet ist, mindestens ein Filterbalg (10, 11) in Radialrichtung zu durchströmen ist und zwischen den Filterbälgen (10, 11) ein Strömungsraum (12) für das Fluid gebildet ist, der mit einer Stirnseite des Filterelements (7) kommuniziert, wobei jeder Filterbalg (10, 11) als Sternfilter mit sternförmig angeordneten Filterfalten ausgebildet ist, **dadurch gekennzeichnet, dass** an mindestens einer Stirnseite des Filterelements (7) ein Dichtring (19) zwischen einem Filterbalg (11) und dem Filtergehäuse (2) angeordnet ist.

2. Filtereinrichtung nach Anspruch 1, mit einem in einem Filtergehäuse (2) angeordneten Filterelement (7), das von einem zu filtrierenden Fluid zu durchströmen ist, wobei das Filterelement (7) als Mehrfachbalgfilter mit mindestens zwei radial ineinandergesetzten Filterbälgen (10, 11) ausgebildet ist, mindestens ein Filterbalg (10, 11) in Radialrichtung zu durchströmen ist und zwischen den Filterbälgen (10, 11) ein Strömungsraum (12) für das Fluid gebildet ist, der mit einer Stirnseite des Filterelements (7) kommuniziert, wobei der Strömungsraum (12) axial zur Anströmseite verschlossen ist und die den Strömungsraum (12) radial begrenzenden Filterbälge (10, 11) jeweils radial in Richtung des Strömungsraums (12) durchströmt werden, wobei jeder Filterbalg (10, 11) als Sternfilter mit sternförmig angeordneten Filterfalten ausgebildet ist, wobei an mindestens einer Stirnseite des Filterelements (7) ein Dichtring (19) zwischen einem Filterbalg (11) und dem Filtergehäuse (2) angeordnet ist, **dadurch gekennzeichnet, dass** ein erster Filterbalg (10) an einer Stirnseite von einem Abdeckelement (17) abgedeckt ist und der zweite Filterbalg (11) an der gegenüberliegenden Stirnseite von einem Abdeckelement (15) abgedeckt ist, wobei die axiale anströmseitige Stirnseite des radial innen liegenden Filterbalges von einem Abdeckring überdeckt ist und die axiale abströmseitige Stirnseite des radial innen liegenden Filterbalges keine Abdeckung aufweist und eine Abdeckscheibe vorgesehen ist, die den innen liegenden Anströmraum innerhalb des inneren Faltenbalges axial verschließt, wobei die axiale abströmseitige Stirnseite des radial außen liegenden Filterbalgs von einem Abdeckring überdeckt ist.

3. Filtereinrichtung nach einem der vorhergehenden Ansprüche, wobei der Strömungsraum (12) den Reinraum bildet.

4. Filtereinrichtung nach einem der vorhergehenden Ansprüche, **dadurch gekennzeichnet, dass** zumindest ein Teil unmittelbar zueinander benachbarter Filterfalten an einer axialen Stirnseite eines Filterbalgs (10, 11) zusammengeheftet ist.

5. Filtereinrichtung nach Anspruch 4, **dadurch gekennzeichnet, dass** die Stirnkanten der Filterfalten an der Anströmseite zusammengeheftet sind.

6. Filtereinrichtung nach Anspruch 4 oder 5, **dadurch gekennzeichnet, dass** die Stirnkanten der Filterfalten an der Abströmseite zusammengeheftet sind.

7. Filtereinrichtung nach einem der Ansprüche 4 bis 6, **dadurch gekennzeichnet, dass** zwischen jeweils zwei zusammengehefteten Filterfalten an der Stirnseite eines Filterbalgs (10, 11) ein freier Strömungsdurchtritt gebildet ist.

8. Filtereinrichtung nach einem der Ansprüche 4 bis 7, **dadurch gekennzeichnet, dass** die zusammengehefteten Filterfalten miteinander verklebt sind.

9. Filtereinrichtung nach einem der vorhergehenden Ansprüche, **dadurch gekennzeichnet, dass** der Strömungsraum (12) zwischen den Filterbälgen (10, 11) einen sich über die axiale Länge des Filterelements (7) ändernden Querschnitt aufweist.

10. Filtereinrichtung nach einem der vorhergehenden Ansprüche, **dadurch gekennzeichnet, dass** der Strömungsraum (12) zwischen den Filterbälgen (10, 11) von einem Stützgerüst (13) eingefasst ist.

11. Filtereinrichtung nach einem der vorhergehenden Ansprüche, **dadurch gekennzeichnet, dass** ein Filterbalg (10) axial angeströmt wird.

12. Filtereinrichtung nach Anspruch 11, **dadurch gekennzeichnet, dass** der Dichtring (19) an der Abströmseite im Übergang zwischen axialer Stirnseite und radial außen liegender Mantelfläche des Filterelements (7) angeordnet ist.

13. Filtereinrichtung nach Anspruch 12, **dadurch gekennzeichnet, dass** der Dichtring (19) zwischen dem Filterelement (7) und dem Filtergehäuse (2) bzw. einem mit dem Filtergehäuse (2) verbundenen Bauteil eingeklemmt ist.

14. Filterelement (7) zur Verwendung in einer Filtereinrichtung nach einem der vorhergehenden Ansprüche, insbesondere Luftfilterelement für eine Brennkraftmaschine, wobei das Filterelement (7) in einem Filtergehäuse (2) anordenbar und von einem zu filtrierenden Fluid durchströmbar ist, wobei das Filterelement (7) als Mehrfachbalgfilter mit mindestens zwei radial ineinandergesetzten Filterbälgen (10, 11) ausgebildet ist, mindestens ein Filterbalg (10, 11) in Radialrichtung zu durchströmen ist und zwischen den Filterbälgen (10, 11) ein Strömungsraum (12) für das Fluid gebildet ist, der mit einer Stirnseite des Filterelements (7) kommuniziert, wobei der Strömungsraum (12) axial zur Anströmseite verschlossen ist und die den Strömungsraum (12) radial begrenzenden Filterbälge (10, 11) jeweils radial in Richtung des Strömungsraums (12) durchströmt werden, wobei jeder Filterbalg (10, 11) als Sternfilter mit sternförmig angeordneten Filterfalten ausgebildet ist, wobei an mindestens einer Stirnseite des Filterelements (7) ein Dichtring (19) zur Abdichtung zwischen einem Filterbalg (11) und dem Filtergehäuse (2) angeordnet ist, **dadurch gekennzeichnet, dass** ein erster Filterbalg (10) an einer Stirnseite von einem Abdeckelement (17) abgedeckt ist und der zweite Filterbalg (11) an der gegenüberliegenden Stirnseite von einem Abdeckelement (15) abgedeckt ist, wobei die axiale anströmseitige Stirnseite des radial innen liegenden Filterbalges von einem Abdeckring überdeckt ist und die axiale abströmseitige Stirnseite des radial innen liegenden Filterbalges keine Abdeckung aufweist und eine Abdeckscheibe vorgesehen ist, die den innen liegenden Anströmraum innerhalb des inneren Faltenbalges axial verschließt, wobei die axiale abströmseitige Stirnseite des radial außen liegenden Filterbalgs von einem Abdeckring überdeckt ist.

15. Filterelement nach Anspruch 14, wobei der Strömungsraum den Reinraum bildet.
